(19) **Europäisches Patentamt**
**European Patent Office**
**Office européen des brevets**

(11) **EP 3 391 675 B1**

(12) **FASCICULE DE BREVET EUROPEEN**

(45) Date de publication et mention de la délivrance du brevet:
**15.02.2023 Bulletin 2023/07**

(21) Numéro de dépôt: **16829257.1**

(22) Date de dépôt: **16.12.2016**

(51) Classification Internationale des Brevets (IPC):
**H04L 9/40** *(2022.01)*   **H04W 12/37** *(2021.01)*
**H04W 12/06** *(2009.01)*   **H04L 67/62** *(2022.01)*
**H04W 4/50** *(2018.01)*   **H04W 76/10** *(2018.01)*

(52) Classification Coopérative des Brevets (CPC):
**H04L 63/0853; H04L 67/62; H04W 4/50;**
**H04W 12/06; H04W 12/37; H04W 76/10;**
H04W 4/60

(86) Numéro de dépôt international:
**PCT/FR2016/053535**

(87) Numéro de publication internationale:
**WO 2017/103542 (22.06.2017 Gazette 2017/25)**

(54) **PROCÉDÉ DE GESTION DES CONNEXIONS ENTRE UN ÉLÉMENT SÉCURISÉ ET UN SERVEUR**

VERFAHREN ZUR VERWALTUNG VERBINDUNGEN ZWISCHEN EINEM SICHEREN ELEMENT UND EINEM SERVER

METHOD OF MANAGING THE CONNECTIONS BETWEEN A SECURE ELEMENT AND A SERVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1562872**

(43) Date de publication de la demande:
**24.10.2018 Bulletin 2018/43**

(73) Titulaire: **IDEMIA France**
**92400 Courbevoie (FR)**

(72) Inventeurs:
- **DEPRUN, Jean-François**
  **92700 Colombes (FR)**
- **SEGALOU, David**
  **92700 Colombes (FR)**
- **ALZAI, Eric**
  **92700 Colombes (FR)**

(74) Mandataire: **Idemia**
**2, place Samuel de Champlain**
**92400 Courbevoie (FR)**

(56) Documents cités:
**US-A1- 2015 059 006**

- **Giesecke & Devrient: "White Paper The OTA Platform in the World of LTE", , 1 janvier 2011 (2011-01-01), XP055111231, Extrait de l'Internet: URL:http://www.carabinerpr.com/pdf/WP_OTA_ and_LTE_Jan_11.pdf [extrait le 2014-04-01]**
- **GLOBALPLATFORM: "Remote Application Management over HTTP Card Specification v2.2 - Amendment B Version 1.1", INTERNET CITATION, juin 2009 (2009-06), pages 1-25, XP002590002, Extrait de l'Internet: URL:http://www.globalplatform.org/specific ationscard.asp [extrait le 2010-06-30]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de gestion des connexions entre un élément sécurisé et un serveur d'un réseau de communication.

Elle concerne en particulier un procédé de gestion des connexions dites « *Over-The-Air* » ou connexions OTA.

Un élément sécurisé, tel qu'une carte à puce par exemple, est incorporé dans un dispositif hôte. Le dispositif hôte est, par exemple, un téléphone portable, une tablette numérique ou tout autre équipement électronique tel qu'un compteur électrique, un véhicule, une machine à café, etc.

Un élément sécurisé peut être par exemple une carte de type UICC (pour « *Universal Integrated Circuit Card* ») visée dans la norme ETSI TS 102 221, et regroupe les cartes à puce classiques, type carte SIM (ou USIM - pour « *Universal Subscriber Identity Module* »), mais également des jetons (*token*) sécurisés, ou par exemple une carte de type eUICC (pour « *embeded Universal Integrated Circuit Card* ») et visée dans la norme ETSI TS 103 383.

L'élément sécurisé peut être aussi un élément sécurisé embarqué (ou eSE) connu en terminologie anglo-saxonne comme « *embedded Secure Element* ».

Le serveur auquel l'ensemble d'éléments sécurisés se connecte fait partie d'un réseau de communication comportant un ensemble d'équipements d'un opérateur permettant la connexion et la connectivité de ses abonnés.

Lorsqu'une connexion entre un élément sécurisé et le serveur est établie, des données concernant l'élément sécurisé ou le dispositif hôte sont mises à jour.

Par exemple des données stockées ou des applications installées dans l'élément sécurisé ou dans le dispositif hôte sont mises à jour avec des nouvelles données, des nouvelles fonctionnalités ou des nouveaux services proposés par l'opérateur.

La connexion entre un élément sécurisé et un serveur peut être mise en oeuvre à l'initiative du serveur ou de l'élément sécurisé. Lorsque la connexion est mise en oeuvre à l'initiative du serveur (connu comme « *mode Push* »), le serveur envoie un message au dispositif hôte, par exemple de type SMS, l'élément sécurisé initiant alors une connexion OTA avec le serveur à réception du SMS dans le dispositif de connexion. Lorsque la connexion est mise en oeuvre à l'initiative de l'élément sécurisé (connu comme « *mode Pull* »), l'élément sécurisé initie la connexion avec le serveur à travers le dispositif hôte.

Les nouvelles générations de réseaux de communication mobiles, comme par exemple les réseaux de communication LTE (« *Long Term Evolution* », connus comme « *réseaux 4G* ») n'utilisent pas nécessairement les SMS et par conséquent ne peuvent pas mettre en oeuvre le mode de connexion dit « *mode Push* ». Dans de tels réseaux de communication, les connexions entre les éléments sécurisés et le serveur sont établies à l'initiative des éléments sécurisés.

Des instants de connexion ainsi qu'une période de temps écoulé entre deux instants de connexion consécutifs sont associés à chaque élément sécurisé.

Afin d'éviter la saturation du serveur, les instants de connexion auxquelles les connexions, par exemple des connexions OTA, qui sont établies entre les éléments sécurisés et le serveur sont étalés dans le temps. Pour cela, les instants de connexion et la période de temps entre deux instants de connexion consécutifs associés aux éléments sécurisés doivent être respectivement différents.

La période de temps entre deux instants de connexion consécutifs peut être déterminée par l'élément sécurisé et/ou par le serveur et est fonction d'un intervalle d'accès (nommé « *polling interval* » en terminologie anglo-saxonne), l'intervalle d'accès représentant l'intervalle de temps entre deux accès consécutifs du dispositif hôte à l'élément sécurisé. Cette période de temps déterminée est une période de temps théorique.

En particulier, la période de temps entre deux instants de connexion consécutifs correspond à un nombre d'intervalles d'accès.

L'intervalle d'accès est propre au dispositif hôte, mais l'élément sécurisé peut solliciter le dispositif hôte pour établir l'intervalle d'accès à une valeur souhaitée.

Néanmoins, certains dispositifs hôte ne présentent pas de fonctionnalité leur permettant de modifier leur intervalle d'accès ou bien ne tiennent pas compte de la requête issue de l'élément sécurisé pour modifier cette valeur ou ne respectent pas la valeur demandée par l'élément sécurisé et imposent la leur.

Ainsi, la période de temps entre deux instants de connexion consécutifs déterminée par l'élément sécurisé et/ou par le serveur, ou période de temps théorique, présente un écart par rapport à la période de temps réelle entre deux instants de connexion consécutifs.

US2015059006 divulgue un programme ERPE sur un appareil mobile, qui est configuré pour l'interrogation des serveurs OTA et DM. ERPE télécharge à partir du serveur OTA les intervalles d'interrogation et un code pour l'heuristique de randomisation d'horloge (heuristique de synchronisation). Ce code crée et gère une table des heures de début dans l'horloge de fonctionnement de la connexion. Il est utilisé pour éviter que tous les appareils activés ne soient interrogés ou mis à jour en même temps, ce qui surcharge les systèmes de serveurs. Les règles heuristiques téléchargées sont spécifiques à un type et à un modèle d'appareil.

La présente invention propose d'optimiser la gestion des connexions entre les éléments sécurisés et les serveurs d'un réseau de communication La présente invention est définie par l'objet des revendications indépendantes. Modes de réalisation préférés sont définis par les revendications dépendantes.

D'autres particularités et avantages de l'invention apparaîtront encore dans la description ci-après.

Aux dessins annexés, donnés à titre d'exemples non limitatifs :

- la figure 1 représente schématiquement un contexte dans lequel un mode de réalisation de la présente invention est mis en oeuvre ;
- la figure 2 représente schématiquement un dispositif hôte comprenant un élément sécurisé conforme à un mode de réalisation de l'invention ;
- la figure 3 représente un schéma dans lequel des connexions dans le temps sont représentées ; et
- la figure 4 représente schématiquement des étapes d'un procédé de gestion de connexion entre un élément sécurisé et un serveur selon un mode de réalisation de l'invention.

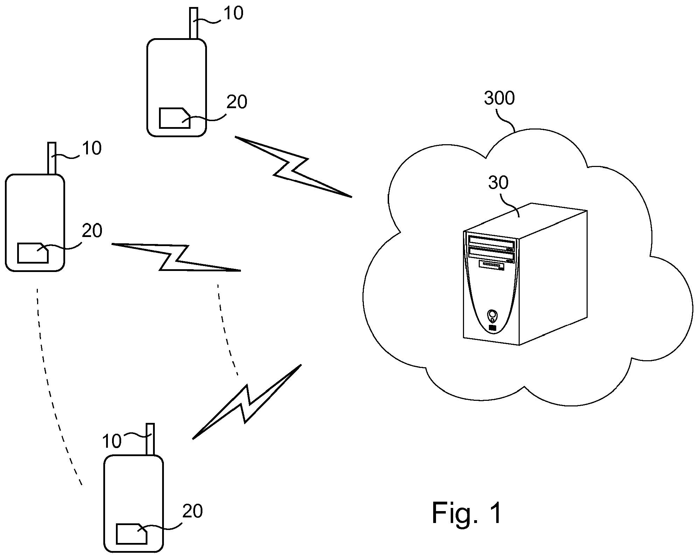

La Figure 1 représente un ensemble de dispositifs hôte 10, chacun des dispositifs hôte comportant un élément sécurisé 20.

Bien entendu, chaque dispositif hôte 10 peut comporter un nombre différent d'éléments sécurisés 20.

Les dispositifs hôte 10 sont par exemple des téléphones portables, des tablettes numériques ou tout autre équipement électronique tel qu'un compteur électronique, un véhicule, une machine à café, etc.

Cet ensemble de dispositifs hôte peut comporter différents types d'éléments sécurisés, c'est-à-dire il peut comporter par exemple un sous-ensemble de téléphones portables, un sous-ensemble de tablettes, ainsi que d'autres sous-ensembles d'un autre équipement électronique.

L'élément sécurisé 20 est par exemple une carte à circuit intégré universelle (UICC) ou une carte à circuit intégré universelle et embarquée (eUICC) ou bien encore un élément sécurisé de type eSE.

Les éléments sécurisés 20 de l'ensemble peuvent communiquer avec un réseau de communication 300 comportant un ensemble d'équipements d'un opérateur permettant la connexion et la connectivité de ses abonnés.

En particulier, l'ensemble d'équipements de l'opérateur comporte un serveur 30 avec lequel communiquent les éléments sécurisés 20 de l'ensemble et à partir duquel des données concernant les éléments sécurisés 20 ou les dispositifs hôtes 10 sont mises à jour.

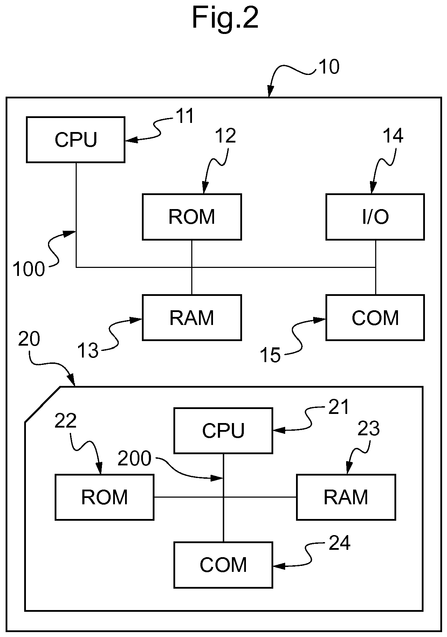

La Figure 2 représente schématiquement un dispositif hôte 10 comprenant un élément sécurisé 20 conforme à un mode de réalisation de l'invention.

Le dispositif hôte 10 comprend un bus de communication 100 auquel sont reliées :

- une unité de traitement 11, nommée sur la figure CPU (pour « *Central Processing Unit* ») et pouvant comporter un ou plusieurs processeurs ;
- une mémoire non volatile 12, par exemple ROM (pour « *Read Only Memory* »), EEPROM (pour « *Electrically Erasable Read Only Memory* ») ou une mémoire Flash;
- une mémoire vive 13 ou RAM (pour « *Random Access Memory* ») ;
- une interface 14 d'entrée/sortie, nommée sur la figure I/O (pour « *Input/Output* »), par exemple un écran, un clavier, une souris ou un autre dispositif de pointage tel qu'un écran tactile ou une télécommande permettant à un utilisateur d'interagir avec le système via une interface graphique ; et
- une interface de communication 15, nommée COM sur la figure, adaptée à échanger des données par exemple avec un serveur via un réseau, ou une interface de lecture/écriture.

L'élément sécurisé 20 comprend un bus de communication 200 auquel sont reliées :

- une unité de traitement 21 ou microprocesseur, nommée sur la figure CPU (pour « *Central Processing Unit* ») ;
- une mémoire non volatile 22, par exemple ROM (pour « *Read Only Memory* »), EEPROM (pour « *Electrically Erasable Read Only Memory* ») ou mémoire Flash;
- une mémoire vive 23 ou RAM (pour « *Random Access Memory* ») ; et
- une interface de communication 24, nommée COM sur la figure, adaptée à échanger des données avec le processeur 11 du dispositif hôte 10.

La mémoire vive 23 comprend des registres adaptés à l'enregistrement des variables et paramètres créés et modifiés au cours de l'exécution d'un programme informatique comprenant des instructions pour la mise en oeuvre d'un procédé selon l'invention. Les codes d'instructions du programme stocké en mémoire non-volatile 22 sont chargés en mémoire RAM 23 en vue d'être exécutés par l'unité de traitement CPU 21.

La mémoire non-volatile 22 est par exemple une mémoire réinscriptible de type EEPROM ou mémoire Flash pouvant constituer un support au sens de l'invention, c'est-à-dire pouvant comprendre un programme informatique comprenant des instructions pour la mise en oeuvre des procédés selon l'invention.

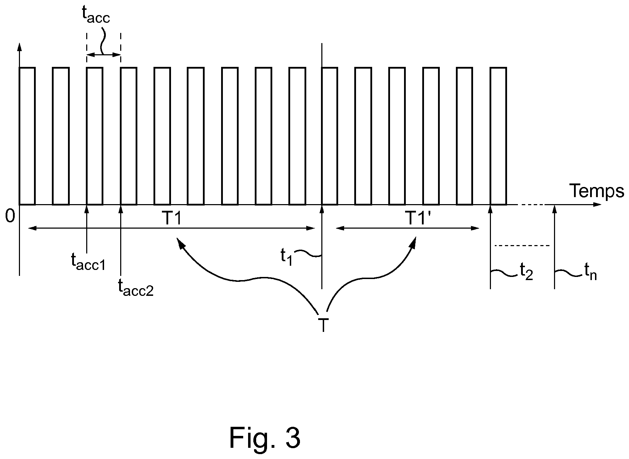

La Figure 3 représente une ligne de temps dans laquelle des instants de connexion d'un élément sécurisé 20 à un serveur 30 sont représentés.

Cette figure illustre des instants de connexion $t_1$, $t_2$,... $t_n$, en particulier un premier instant de connexion $t_1$ et un deuxième instant de connexion $t_2$, les instants de connexion $t_1$, $t_2$ correspondant à deux connexions consécutives établies entre un élément sécurisé 20 de l'ensemble et le serveur 30.

Le temps écoulé entre les deux connexions consécutives ou deux instants de connexion $t_1$, $t_2$ consécutifs correspond à une période de temps réelle qui sera nommée dans le document période de connexion T.

Lorsque le dispositif hôte 10 est allumé et que sa phase d'allumage et d'initialisation est mise en oeuvre, le dispositif hôte 10 accède périodiquement à l'élément sécurisé 20. Par exemple, lors d'un accès, le dispositif hôte 10 envoie une commande (commande « STATUS ») à l'élément sécurisé 20. Ainsi, l'élément sécurisé 20 reçoit périodiquement la commande « STATUS » de la part du dispositif hôte 10.

Le temps écoulé entre l'envoi de deux commandes « STATUS » consécutives par le dispositif hôte 10 correspond à l'intervalle d'accès $t_{acc}$ (nommé en terminologie anglo-saxonne « *Polling Interval* »).

L'intervalle d'accès $t_{acc}$ est associé au dispositif hôte 10, et sa valeur varie d'un dispositif hôte à un autre. Ainsi, un dispositif hôte 10 peut être caractérisé par rapport à cette valeur.

D'une manière générale, l'intervalle d'accès $t_{acc}$ présente une valeur de 30 secondes, c'est-à-dire que 30 secondes s'écoulent entre deux accès du dispositif hôte 10 à l'élément sécurisé 20, ou entre l'envoi des deux commandes STATUS du dispositif hôte 10 à l'élément sécurisé 20.

L'intervalle d'accès $t_{acc}$ peut être enregistré dans l'élément sécurisé 20 par exemple lors de sa fabrication.

Comme représenté sur la figure 3, un nombre déterminé d'intervalles d'accès $t_{acc}$ est présent entre le moment où le dispositif hôte 10 va commencer à envoyer ses commandes STATUS (après sa phase d'allumage et d'initialisation, instant représenté par 0 sur la figure 3) et le premier instant de connexion $t_1$. Le temps écoulé entre l'instant 0 et le premier instant de connexion $t_1$ représente une période de temps nommée $T_1$. On notera qu'un nombre déterminé d'intervalles d'accès $t_{acc}$ est présent entre l'instant 0 et le premier instant de connexion $t_1$, dans cet exemple le nombre étant de neuf intervalles d'accès.

En outre, un nombre déterminé d'intervalles d'accès $t_{acc}$ sont présents entre le premier instant de connexion $t_1$ et le deuxième instant de connexion $t_2$, le temps écoulé entre le premier instant de connexion $t_1$ et le deuxième instant de connexion $t_2$ représente une période de temps nommée $T_1'$. Ainsi, la période de temps $T_1'$ comprend un nombre déterminé d'intervalles d'accès $t_{acc}$. Dans l'exemple représenté, la période de temps réelle écoulée entre deux instants de connexion consécutifs $t_1$ et $t_2$ ou période de connexion T1' comporte cinq intervalles d'accès $t_{acc}$.

Ainsi, un intervalle d'accès $t_{acc}$ représente le temps écoulé entre deux accès consécutifs du dispositif hôte 10 à l'élément sécurisé 20.

Dans l'exemple de réalisation représenté à la figure 3, les instants de temps $t_{acc1}$, $t_{acc2}$ représentent respectivement un premier accès et un second accès du dispositif hôte 10 à l'élément sécurisé 20.

Dans certains dispositifs hôte 10, la valeur de l'intervalle d'accès $t_{acc}$ associée peut être modifiée à la demande de l'élément sécurisé 20 qu'il incorpore.

Pour que l'intervalle d'accès $t_{acc}$ puisse être modifié, le dispositif hôte 10 doit supporter une fonctionnalité permettant la modification de la valeur de l'intervalle d'accès $t_{acc}$.

Lorsqu'un élément sécurisé 20 souhaite modifier et proposer une modification de la valeur de l'intervalle d'accès $t_{acc}$, il envoie une commande, par exemple une commande proactive du type « Intervalle d'accès » (« *Poll Interval* » en terminologie anglo-saxonne), au dispositif hôte 10.

On notera qu'une commande proactive correspond à une commande adressée par un élément sécurisé vers un dispositif hôte incorporant l'élément sécurisé.

Si le dispositif hôte 10 supporte une fonctionnalité permettant la modification de la valeur de l'intervalle d'accès $t_{acc}$, il répond à l'élément sécurisé en lui envoyant une commande nommée « *Terminal Response* Command» dans laquelle la valeur maximale de l'intervalle d'accès supportée par le dispositif hôte 10 est incluse.

On notera que la valeur de l'intervalle d'accès $t_{acc}$ est uniquement modifiée si le dispositif hôte supporte une fonctionnalité permettant cette modification.

Dans certains cas, lorsque le dispositif hôte ne modifie pas la valeur de l'intervalle d'accès, il en informe l'élément sécurisé et celui-ci peut à son tour en informer le serveur.

Comme décrit ci-dessus, on notera que la période de temps réelle entre deux instants de connexion consécutifs ou période de connexion est différente pour chaque élément sécurisé 20 de l'ensemble. Cette période de temps ou période de connexion étant déterminée entre autre en fonction d'un paramètre d'identification unique ICCID associé à l'élément sécurisé 20.

Comme illustré sur la figure 3, la période de connexion T ou période de temps entre deux instants de connexion consécutifs $t_1$, $t_2$ représente un temps équivalent à l'intervalle d'accès $t_{acc}$ répété un certain nombre de fois.

Ainsi, la période de temps entre deux instants de connexion consécutifs $t_1$, $t_2$ est fonction de la valeur de l'intervalle d'accès associé au dispositif hôte 10.

Par conséquent, la période de temps entre deux instants de connexion consécutifs $t_1$, $t_2$ ou période de connexion T est déterminée dans un mode de réalisation par la formule :

$$T = n \times t_{acc}$$

où $t_{acc}$ correspond à l'intervalle d'accès associé au dispositif hôte 10 incorporant l'élément sécurisé 20, et *n* au paramètre représentant le nombre de fois que l'intervalle d'accès $t_{acc}$ est répété dans une période de temps entre deux instants de connexion $t_1$, $t_2$ ou période de connexion T.

Le nombre de fois que l'intervalle d'accès $t_{acc}$ est répété dans une période de connexion T correspond à la valeur d'un paramètre n. Le paramètre *n* est déterminé en fonction du paramètre d'identification unique ICCID associé à l'élément sécurisé 20, ainsi que de deux paramètres, un premier paramètre V et un second paramètre I.

Ainsi, dans un mode de réalisation, la valeur du paramètre n est déterminée par une fonction F ayant comme entrées le paramètre d'identification unique ICCID, le premier paramètre V, et le deuxième paramètre I.

Ainsi,

$$n = F(ICCID, V, I)$$

Les valeurs de paramètres ICCID, V et I sont stockées dans l'élément sécurisé 20 lors de sa fabrication. Le premier paramètre V et le deuxième paramètre I, par la suite, évoluent et sont mis à jour au cours de l'utilisation de l'élément sécurisé, une fois activé et déployé sur le « terrain ».

En particulier, la valeur du premier paramètre V est incrémentée après chaque connexion de l'élément sécurisé 20 au serveur 30. La valeur du deuxième paramètre I peut être modifiée par le serveur 30. Lorsque la valeur du deuxième paramètre I est modifiée par le serveur 30, la déduction par des dispositifs tiers des instants de connexion est rendue davantage difficile, les connexions entre l'élément sécurisé et le serveur étant davantage sécurisées.

Ces paramètres peuvent être utilisés pour la détermination de la période de connexion T par l'élément sécurisé 20 sans nécessiter aucune action de la part du serveur 30.

Dans un mode de réalisation, la fonction F (ICCID, V, I) prend la forme suivante :

$$F(ICCID, V, I) = constante\ 1 + (hash(ICCID, V, I)) \times MODULO\ constante\ 2$$

où *constante 1*, *constante 2* représentent des durées, le résultat de la fonction F étant ainsi un temps.

A titre d'exemple nullement limitatif, *constante 1* présente une valeur d'une semaine et *constante 2* d'un jour. L'élément sécurisé établit alors une connexion avec le serveur à des instants de connexion espacés d'une durée correspondant à une semaine plus une durée aléatoire entre 0 et 1 jour.

Bien entendu, les valeurs de *constante 1* et *constante 2* peuvent être différentes de l'exemple précédent.

Une fois que le paramètre *n* a été déterminé, l'intervalle d'accès $t_{acc}$ est multiplié par la valeur déterminée, le résultat de cette multiplication étant la période de temps entre deux instants de connexion consécutifs $t_1$, $t_2$ ou période de connexion T.

Une fois la période de connexion T déterminée, des instants de connexion (tels que le premier instant de connexion $t_1$ et le second instant de connexion $t_2$ représentés à la figure 3) sont déterminés en fonction de la période de connexion T déterminée.

L'élément sécurisé 20 établi une connexion avec le serveur 30 à chaque instant de connexion déterminé.

Ainsi, la période de temps entre deux instants de connexion consécutifs $t_1$, $t_2$ est fonction d'un ensemble de paramètres et de l'intervalle d'accès $t_{acc}$ associé au dispositif hôte 10, l'ensemble de paramètres comportant le paramètre d'identification unique ICCID, le premier paramètre V et le deuxième paramètre I.

On notera que l'élément sécurisé 20 et le serveur 30 déterminent les instants de connexion et la période de temps entre deux instants de connexion $t_1$, $t_2$ théoriques en utilisant une valeur théorique d'intervalles d'accès $t_{acc}$.

Néanmoins, comme indiqué ci-dessus, la valeur réelle de l'intervalle d'accès du dispositif hôte 10 à l'élément sécurisé 20 ne correspond pas à celle demandée par l'élément sécurisé 20, cette valeur demandée étant celle utilisée dans le calcul de la période de temps théorique entre deux instants de connexion $t_1$, $t_2$ consécutifs.

Ainsi, il existe un intervalle d'accès réel et un intervalle d'accès théorique, et par conséquent, une période de temps théorique et une période de temps réelle entre deux instants de connexion consécutifs.

Selon un mode de réalisation, dans l'élément sécurisé 20, un compteur de déclenchement est configuré pour compter le nombre d'intervalles d'accès $t_{acc}$ présents dans la période de connexion T ou période de temps entre deux instants de connexion $t_1$, $t_2$ consécutifs, et ainsi déterminer un instant de connexion au serveur 30.

Lorsqu'un nombre d'intervalles d'accès $t_{acc}$ égal à la valeur du paramètre $n$ déterminé est compté, l'élément sécurisé 20 établit une connexion avec le serveur 30 à l'instant de temps déterminé.

Comme indiqué ci-dessus, lors d'un accès du dispositif hôte 10 à l'élément sécurisé 20, par exemple à l'instant $t_{acc1}$, une commande « STATUS » est envoyée par le dispositif hôte 10 à l'élément sécurisé 20.

Ainsi, dans le mode de réalisation décrit, le compteur de déclenchement compte le nombre de commandes « STATUS » envoyées par le dispositif hôte 10 à l'élément sécurisé 20, ce qui correspond à compter le nombre d'intervalles d'accès $t_{acc}$ réels.

Comme il sera décrit ultérieurement, selon un mode de réalisation, le compteur de déclenchement est incrémenté à chaque commande STATUS reçue.

Selon un autre mode de réalisation, le compteur de déclenchement est initialisé à la valeur du paramètre $n$ qui a été déterminé, le compteur de déclenchement étant décrémenté à chaque commande STATUS reçue.

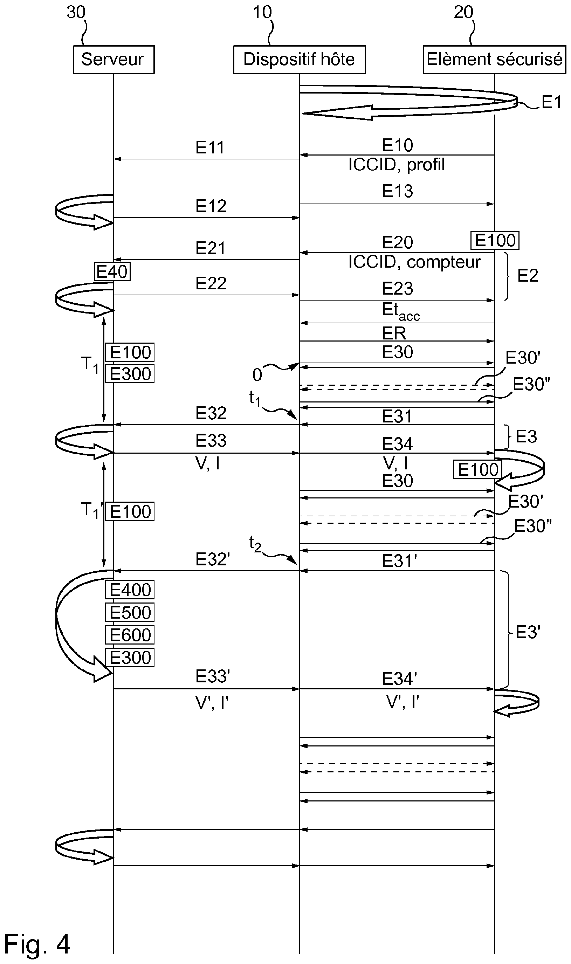

Des étapes du procédé de gestion de connexions entre un élément sécurisé 20 et un serveur 30 d'un réseau de communication 300 selon un mode de réalisation est représenté sur la Figure 4.

Lorsque le dispositif hôte 10 incorporant l'élément sécurisé 20 est allumé, une procédure d'initialisation E1 est mise en oeuvre.

Pendant cette procédure d'initialisation, l'élément sécurisé 20 envoie (après un possible délai, au serveur 30), par l'intermédiaire du dispositif hôte 10, un message lui indiquant qu'il est opérationnel et vient d'être activé, ce message comportant des paramètres. Ainsi, l'élément sécurisé 20 envoie une commande E10 contenant ces paramètres au dispositif hôte 10.

On notera que l'élément sécurisé peut attendre un délai après être allumé (« *power-on* » en terminologie anglo-saxonne) avant de se connecter au serveur 30. Ce délai est déterminé en utilisant la fonction F(ICCID, V, I), cette dernière permettant d'obtenir la valeur du paramètre $n$, et en utilisant la valeur de l'intervalle d'accès (« Polling interval »).

Pour la détermination du premier instant de connexion t1 de l'élément sécurisé 20 au serveur 30, les valeurs du premier paramètre V et du deuxième paramètre I sont telles que la valeur de ce premier instant de connexion t1 est compris entre un premier instant de temps prédéterminé et un second instant de temps prédéterminé.

Les valeurs des premier et second paramètres (V, I) sont enregistrées dans l'élément sécurisé lors de sa fabrication et sont utilisés pour la détermination du tout premier instant de connexion de l'élément sécurisé au serveur lors de la première mise en service de l'élément sécurisé. De même, premier instant de temps prédéterminé second instant de temps prédéterminé sont enregistrées dans l'élément sécurisé lors de sa fabrication.

Ainsi, selon un mode de réalisation, le procédé de gestion des connexions comporte l'établissement d'une première connexion, à un premier instant de connexion, ayant une valeur comprise entre un premier instant de temps prédéterminé et un second instant de temps prédéterminé. Cette étape de détermination est mise en oeuvre après la phase d'allumage ou de redémarrage et l'étape d'initialisation.

Les paramètres envoyés par l'élément sécurisé via la commande E10, pendant la procédure d'initialisation comportent par exemple le paramètre d'identification unique ICCID associé à l'élément sécurisé 20 ainsi que le profil du dispositif hôte 10, profil qui a été transmit au préalable à l'élément sécurisé par le dispositif hôte après allumage du dispositif hôte et durant la séquence d'initialisation. Par profil, nous entendons les caractéristiques supportées par le dispositif hôte 10 (habituellement désignées en terminologie anglo-saxonne par le terme « *terminal profile* »).

Le dispositif hôte 10 envoie un message E11 au serveur 30 transférant ainsi les informations reçues en provenance de l'élément sécurisé 20 par le biais de la commande E10. Le serveur 30 accuse réception au dispositif hôte 10 avec un message E12, et le dispositif hôte 10 envoie l'accusé de réception via une commande E13 à l'élément sécurisé 20.

La procédure d'initialisation permet en particulier d'enregistrer le profil ou « terminal profile » du dispositif hôte 10 auprès du serveur 30. On notera que l'ICCID est référencé préalablement dans les serveurs pour des aspects d'authentification dans le réseau. Ainsi, grâce à l'envoi de l'ICCID de l'élément sécurisé 20 en même temps que le profil, une correspondance entre le profil du dispositif hôte 10 et l'élément sécurisé 20 qu'il contient est ainsi établie.

Ainsi, une fois que la procédure d'initialisation est terminée, l'élément sécurisé 20 et le dispositif hôte 10 sont enregistrés dans le serveur 30.

Ensuite, l'élément sécurisé 20 met en oeuvre une étape d'envoi E2 du paramètre d'identification unique ICCID. Lors de cette étape d'envoi E2, une commande E20 est envoyée par l'élément sécurisé 20 au dispositif hôte 10. Le dispositif hôte 10 transfère alors les informations de la commande E20 au serveur 30 par l'intermédiaire du message E21. Le serveur 30 renvoie ensuite un accusé de réception E22 au dispositif hôte 10, qui à son tour, envoie l'accusé de réception via une commande E23 à l'élément sécurisé 20.

Outre le paramètre d'identification unique ICCID, dans l'étape d'envoi E2, l'élément sécurisé 20 envoi au serveur (par le moyen du dispositif hôte 10) la dernière valeur du paramètre $n$ atteinte à l'étape de comptage d'un nombre d'intervalles d'accès réels, avant que ledit dispositif hôte 10 ne soit éteint ou redémarré.

Comme décrit ci-dessus, le procédé comporte une étape de détermination du temps réelle entre deux instants de connexion $t_1$, $t_2$ consécutifs entre l'élément sécurisé 20 et le serveur 30.

Côté serveur 30, cette étape de détermination est mise en oeuvre une fois que le serveur 30 a reçu deux connexions consécutives de la part de l'élément sécurisé 20.

Côté élément sécurisé 20, l'étape de détermination de cette période de temps réelle comporte une étape de comptage d'un nombre d'intervalles d'accès réels $t_{acc}$ du dispositif hôte 10 à l'élément sécurisé 20, la période de temps réelle étant équivalente au temps écoulé lors du comptage d'un nombre d'intervalles réels d'accès $t_{acc}$ égal à la valeur du paramètre n déterminé.

La détermination de la valeur du paramètre n est mise en oeuvre en utilisant l'ensemble de paramètres, l'ensemble de paramètres comportant un paramètre d'identification unique ICCID, un premier paramètre V et un second paramètre I.

On notera que l'envoi des commandes E20, E21, E22 et E23 est optionnel, cet envoi étant seulement mis en oeuvre selon certains modes de réalisation.

Dans un mode de réalisation, le procédé comporte la création E40 d'une structure de données comportant des données relatives à un ensemble d'éléments sécurisés 20, les données relatives à l'ensemble d'éléments sécurisés 20 étant pour chaque élément sécurisé 20 de l'ensemble, la période de temps théorique déterminée, la période de temps réelle déterminée, l'intervalle d'accès théorique déterminé, l'intervalle d'accès réel déterminé et le nombre d'intervalles d'accès comptés lors de l'étape de comptage.

Selon un mode de réalisation, la structure de données est stockée dans le serveur 30, et est mise à jour lorsqu'au moins une des données est déterminée.

La structure de données comporte en outre le paramètre d'identification unique de l'élément sécurisé 20, le profil du dispositif hôte 10 (« *terminal profile* » en terminologie anglo-saxonne), le premier instant de temps prédéterminé et le second instant prédéterminé (l'élément sécurise établissant la première connexion au serveur à un instant compris entre ces deux instant de temps prédéterminés) et la valeur du compteur de déclenchement. Une association entre un élément sécurisé référencé par son identifiant unique ICCID et les caractéristiques des paramètres du dispositif hôte dans lequel il se trouve ou bien les caractéristiques de l'élément sécurisé lui-même peut ainsi être faite. De même, une association entre un dispositif hôte donné et les caractéristiques des paramètres de ce type de dispositif hôte peut aussi être faite.

La structure de données comporte aussi la valeur du paramètre n déterminé. Cette valeur du paramètre n est mise à jour à chaque étape de détermination E100 de la valeur du paramètre.

En outre, lors de la première mise en fonctionnement de l'élément sécurisé la valeur du paramètre *n* déterminée après la phase d'initialisation E1 est stockée dans la structure de données. Cette première valeur du paramètre *n* peut être utilisée par la suite par le serveur dans une mode de fonctionnement.

Dans le mode de réalisation représenté, l'élément sécurisé 20 demande au dispositif hôte 10 de modifier l'intervalle d'accès $t_{acc}$. L'élément sécurisé 20 envoie ainsi une commande $Et_{acc}$, (commande proactive de type « *Poll Interval*» en terminologie anglo-saxonne) au dispositif hôte 10 et le dispositif hôte 10 lui répond avec l'envoi d'une commande ER (commande « *Terminal Response* » en terminologie anglo-saxonne).

Ces étapes de demande de modification du « *Polling interval* » sont connues de l'homme du métier et ne sont pas décrites ici en détail.

On notera que dans certains dispositifs hôte 10, l'intervalle d'accès $t_{acc}$ peut être modifié à la demande de l'élément sécurisé 20. Néanmoins, dans d'autres dispositifs hôte 10, l'intervalle d'accès n'est pas modifiable et/ou la demande de modification de la part de l'élément sécurisé n'est pas prise en compte par le dispositif hôte.

Une fois que le dispositif hôte 10 est allumé, il va envoyer périodiquement à l'élément sécurisé 20 des commandes « STATUS » E30, E30' et 30".

Dans ce mode de réalisation, une fois que le compteur de déclenchement atteint à l'étape de comptage, un nombre déterminé de commandes « STATUS » envoyées du dispositif hôte 10 à l'élément sécurisé 20, l'élément sécurisé 20 lance une connexion avec le serveur 30 par l'intermédiaire du dispositif hôte 10.

Selon un mode de réalisation, le compteur de déclenchement peut être incrémenté et lorsqu'il atteint la valeur du paramètre n, l'élément sécurisé 20 lance une connexion, par exemple une connexion OTA (« *Over The Air*» en terminologie anglaise), par l'intermédiaire du dispositif hôte 10 avec le serveur 30.

Selon un autre mode de réalisation, le compteur de déclenchement peut être initialisé à la valeur du paramètre *n*, et il sera par la suite décrémenté à chaque réception d'une commande « STATUS ». Une fois que le compteur de déclenchement présente la valeur zéro (la valeur du paramètre n ayant été ainsi comptée), l'élément sécurisé 20 lance une connexion avec le serveur 30 par l'intermédiaire du dispositif hôte 10. Cette connexion est par exemple une connexion OTA (« *Over The Air* » en terminologie anglaise).

Pour ce faire, l'élément sécurisé 20 envoie une commande de connexion E31 au dispositif hôte 10 qui envoie alors un message de connexion E32 au serveur 30.

Le serveur 30, de son côté, comprend des moyens de détermination d'un paramètre n dont la valeur est fonction dudit paramètre d'identification unique ICCID, d'un premier paramètre V et d'un second paramètre I.

Le serveur 30 comprend aussi des moyens de détermination des instants de connexion théoriques consécutifs de l'élément sécurisé 20 avec le serveur 30. Lesdits instants de connexions théoriques sont déterminés par la multiplication d'un intervalle d'accès théorique associé à un dispositif hôte 10 incorporant ledit élément sécurisé 20 et représentent le temps écoulé théorique entre deux accès consécutifs dudit dispositif hôte 10 audit élément sécurisé 20, par ladite valeur du paramètre $n$ déterminée.

Aussi, à titre d'exemple, nullement limitatif, la valeur de l'intervalle d'accès théorique peut être de 30 secondes.

Ainsi, le serveur 30 met en oeuvre une étape de détermination E300 d'une période de temps théorique entre deux instants de connexion $t_1$, $t_2$ consécutifs entre l'élément sécurisé 20 et le serveur 30 en fonction d'un ensemble de paramètres et d'un intervalle d'accès théorique associé au dispositif hôte 10.

Cette étape de détermination E300 de ladite période de temps théorique comporte une étape de multiplication dudit intervalle d'accès théorique par ladite valeur dudit paramètre $n$ déterminée, le résultat étant ladite période de temps théorique T. Dans certains modes de réalisation, la valeur du compteur reçu par le serveur est prise en compte dans la détermination des instants de connexion $t_1$, $t_2$, ..., $t_n$.

Dans d'autres modes de réalisation, le serveur 30 met en oeuvre une étape de détermination E100 de la valeur du paramètre n en utilisant l'ensemble de paramètres ICCID, V, I.

Dans un mode de réalisation, les valeurs du premier paramètre V et du second paramètre I sont modifiées à des instants prédéfinis.

Par exemple, les valeurs des paramètres V, I sont modifiées par le serveur à chaque connexion entre l'élément sécurisé 20 et le serveur 30. Les instants auxquels des connexions entre l'élément sécurisé 20 et le serveur 30 sont mises en oeuvre correspondent ainsi à des instants prédéfinis.

Ainsi, une fois que la connexion entre l'élément sécurisé 20 et le serveur 30 est établie, le serveur 30 peut envoyer de nouveaux paramètres V, I au dispositif hôte 10 via un message E33. Le dispositif hôte 10 transfert alors, à son tour et via la commande E34 destinée à l'élément sécurisé 20, les paramètres V, I modifiés.

Une fois la commande E34 reçue par l'élément sécurisé 20, l'élément sécurisé 20 détermine la valeur du paramètre $n$, en fonction du paramètre d'identification unique ICCID, et du premier paramètre V et second paramètre I modifiés. Ensuite, l'élément sécurisé 20 détermine une nouvelle période de connexion mettant en oeuvre une étape de comptage de la valeur du paramètre n déterminé.

L'élément sécurisé 20 réinitialise alors la valeur du compteur de déclenchement à la valeur du paramètre n déterminée, et compte à nouveau le nombre de commandes « STATUS » E30, E30', E30" reçues de la part du dispositif hôte 10. Une fois comptabilisé un nombre de commandes « STATUS » E30, E30', E30", équivalant à la valeur du paramètre n, l'élément sécurisé 20 lance une nouvelle connexion avec le serveur 30.

Ainsi, l'élément sécurisé 20 envoie une nouvelle commande de connexion E31' au dispositif hôte 10, et le dispositif hôte 10 transfert la commande de connexion via un message E32' au serveur 30. Le serveur 30 peut ensuite envoyer au dispositif hôte 10 un message E33' comportant une mise à jour du premier paramètre V et du second paramètre I. Le dispositif hôte 10, transfert alors à l'élément sécurisé 20 les paramètres V, I mis à jour via une commande E34'.

L'élément sécurisé 20 détermine ensuite la valeur du paramètre n avec le paramètre d'identification unique ICCID et le premier paramètre V et le second paramètre I mis à jour, afin de déterminer la nouvelle période de connexion T1'.

On notera que les périodes de connexion T1, T1' peuvent être différentes ou égales dès lors que le premier paramètre V et le second paramètre I ont été mis à jour par le serveur 30. Bien entendu, si au moins un des paramètres V, I est modifié, lors de leur mise à jour par le serveur, par une valeur différente de la précédente, la période de connexion T1' sera différente de la période de connexion T1. Au contraire, si aucun des paramètres V, I n'est modifié lors de leur mise à jour par le serveur, ou s'ils le sont mais avec des valeurs identiques aux précédente, la période de connexion T1' sera égale à la période de connexion T1.

Quant à l'intervalle d'accès $t_{acc}$, il n'a pas été modifié entre deux connexions consécutives.

Comme indiqué ci-dessus, la mise à jour périodique des premier et second paramètres V, I renforce la sécurité dans les connexions entre l'élément sécurisé 20 et le serveur 30, les périodes de connexions T1, T1' associées aux éléments sécurisés 20 étant difficilement prédictibles par un dispositif tiers.

Une fois que le serveur 30 a reçu deux connexions à des instants de connexion consécutifs $t_1$, $t_2$ de la part de l'élément sécurisé 20, il est en mesure de mettre en oeuvre l'étape de détermination E400 de la période de temps réelle entre deux instants de connexion consécutifs entre l'élément sécurisé 20 et le serveur 30.

Le procédé comporte ensuite une étape de détermination, mise en oeuvre par ledit serveur 30, dudit intervalle d'accès réel associée audit dispositif hôte 10.

Dans un mode de réalisation, l'intervalle d'accès réel est déterminé à partir de ladite période de temps réelle et de ladite valeur dudit paramètre n déterminée.

Ensuite, le serveur 30 met en oeuvre une étape de comparaison E500 de la période de temps théorique

EP 3 391 675 B1

déterminée avec la période de temps réelle déterminée.

Si la période de temps théorique déterminée est différente de la période de temps réelle déterminée, le serveur met en oeuvre une étape de modification E600 d'au moins un paramètre de l'ensemble des paramètres de sorte que la période de temps théorique présente une valeur proche de la période de temps réelle déterminée. Une fois les paramètres modifiés, une étape de détermination E300 d'une nouvelle période de temps théorique prenant en compte ledit au moins un des paramètres modifiés est mise en oeuvre.

Selon le mode de réalisation représenté, l'étape de modification E600 est mise en oeuvre par le serveur 30. Le procédé comporte alors en outre une étape d'envoi E33', mise en oeuvre par le serveur, dans laquelle ledit au moins un paramètre V, I de l'ensemble de paramètres V, I, ICCID modifié est envoyé à l'élément sécurisé 20, l'étape de détermination E100 de la valeur d'un paramètre n étant mise en oeuvre par l'élément sécurisé en utilisant ledit au moins un paramètre V, I modifié reçu. L'élément sécurisé 20 détermine ensuite une nouvelle période de temps théorique en utilisant la valeur du paramètre n déterminé.

Selon un autre mode de réalisation (non représenté), l'étape de modification et l'étape de détermination d'une nouvelle période de temps théorique sont mises en oeuvre par ledit serveur 30. Le procédé comporte alors en outre une étape d'envoi, mise en oeuvre par le serveur 30, dans laquelle la nouvelle période de temps théorique déterminée est envoyée à l'élément sécurisé 20.

## Revendications

1. Procédé de gestion des connexions entre un élément sécurisé et un serveur (30) d'un réseau de communication, ledit élément sécurisé (20) étant incorporé dans un dispositif hôte (10), ledit procédé de gestion des connexions étant **caractérisé en ce qu'**il comporte, au niveau du serveur, les étapes suivantes :

   - détermination (E300) d'une période de temps théorique entre deux instants de connexion consécutifs entre ledit élément sécurisé et ledit serveur en fonction d'un ensemble de paramètres et d'un intervalle d'accès théorique associé audit dispositif hôte, l'ensemble de paramètres comportant un paramètre d'identification unique (ICCID) associé audit élément sécurisé (20), un premier paramètre (V) incrémentée après chaque connexion de l'élément sécurisé au serveur et un second paramètre (I) modifiable par le serveur,
   - détermination (E400) d'une période de temps réelle entre deux instants de connexion consécutifs entre ledit élément sécurisé et ledit serveur,
   - comparaison (E500) de ladite période de temps théorique déterminée avec la période de temps réelle déterminée, et

   si la période de temps théorique déterminée est différente de la période de temps réelle déterminée :

   - modification (E600) du second paramètre de sorte que la période de temps théorique soit similaire ou tende vers la période de temps réelle déterminée,
   - détermination d'une nouvelle période de temps théorique prenant en compte ledit second paramètre modifié, et
   - envoi, (E33'), à l'élément sécurisé, du second paramètre modifié pour contrôler une détermination, au niveau de l'élément sécurisé, d'une nouvelle période de temps théorique entre deux instants de connexion consécutifs, en utilisant le second paramètre modifié.

2. Procédé conforme à la revendication 1, **caractérisé en ce qu'**il comporte une étape de détermination (E100) de la valeur d'un paramètre n en utilisant ledit ensemble de paramètres (ICCID, V, I).

3. Procédé conforme à la revendication 2, **caractérisé en ce que** la détermination (E300) de ladite période de temps théorique comporte une étape de multiplication dudit intervalle d'accès théorique par ladite valeur dudit paramètre n déterminée, le résultat étant ladite période de temps théorique (T).

4. Procédé conforme à l'une des revendications 2 ou 3, **caractérisé en ce que** ladite étape de détermination de ladite période de temps réelle comporte une étape de comptage, mise en oeuvre par ledit élément sécurisé (20), d'un nombre d'intervalles d'accès réels ($t_{acc}$) du dispositif hôte (10) à l'élément sécurisé (20), la période de temps réelle étant équivalente au temps écoulé lors du comptage d'un nombre d'intervalles réels d'accès ($t_{acc}$) égal à la valeur du paramètre n déterminée.

5. Procédé conforme à la revendication 4, **caractérisé en ce qu'**il comporte une étape d'envoi (E20), mise en oeuvre par l'élément sécurisé (20), dans laquelle la dernière valeur dudit paramètre n atteinte à l'étape de comptage d'un nombre d'intervalles d'accès réels avant que ledit dispositif hôte ne soit éteint ou redémarré, est envoyée au serveur, , ladite étape d'envoi (E20) étant mise en oeuvre lorsque ledit dispositif hôte (10) initie une phase d'initialisation (E1) avec le serveur (30), ladite phase d'initialisation (E1) étant mise en oeuvre après l'allumage ou le redémarrage dudit dispositif hôte.

6. Procédé de gestion des connexions conforme à l'une des revendications 1 à 5, **caractérisé en ce que** ledit ensemble de paramètres comporte un paramètre d'identification unique (ICCID), un premier paramètre (V) et un second paramètre (I).

7. Procédé de gestion des connexions conforme à la revendication 6 **caractérisé en ce que** après la phase d'allumage ou de redémarrage et la phase d'initialisation (E1), ledit procédé comporte l'établissement d'une première connexion à un premier instant de connexion ayant une valeur comprise entre un premier instant de temps prédéterminée et un second instant de temps prédéterminé.

8. Procédé de gestion des connexions conforme à l'une des revendications 4 à 7, **caractérisé en ce qu'**il comporte une étape de détermination, mise en oeuvre par ledit serveur, dudit intervalle d'accès réel associée audit dispositif hôte à partir de ladite période de temps réelle et de ladite valeur dudit paramètre n déterminée.

9. Procédé conforme à l'une des revendications 2 à 5, **caractérisé en ce que** ladite étape de modification (E600) et ladite étape de détermination (E100) de la valeur d'un paramètre n sont mises en oeuvre par ledit serveur (30), ledit procédé comportant en outre une étape d'envoi, mise en oeuvre par le serveur, dans laquelle ladite valeur du paramètre n déterminée est envoyée audit élément sécurisé.

10. Procédé de gestion des connexions conforme à l'une des revendication 4 à 9, **caractérisé en ce qu'**il comporte la création (E40) d'une structure de données comportant des données relatives à un ensemble d'éléments sécurisés, lesdites données relatives audit ensemble d'éléments sécurisé étant pour chaque élément sécurisé de l'ensemble, ladite période de temps théorique déterminée, ladite période de temps réelle déterminée, l'intervalle d'accès théorique déterminé, l'intervalle d'accès réel déterminé et le nombre d'intervalles d'accès comptés lors de l'étape de comptage, et **en ce que** ladite structure de données est stockée dans ledit serveur, et est mise à jour lorsqu'au moins une des données est déterminée ou reçue.

11. Serveur d'un réseau de communication comportant des moyens de connexion avec un ensemble d'éléments sécurisés (20), chaque élément sécurisé étant incorporé dans un dispositif hôte, ledit serveur étant **caractérisé en ce qu'**il comporte pour chaque élément sécurisé (20):

   - des moyens de détermination d'une période de temps théorique entre deux instants de connexion consécutifs entre ledit élément sécurisé et ledit serveur en fonction d'un ensemble de paramètres et d'un intervalle d'accès théorique associé audit dispositif hôte, l'ensemble de paramètres comportant un paramètre d'identification unique (ICCID) associé audit élément sécurisé (20), un premier paramètre (V) incrémentée après chaque connexion de l'élément sécurisé au serveur et un second paramètre (I) modifiable par le serveur,
   - des moyens de détermination d'une période de temps réelle entre deux instants de connexion consécutifs entre ledit élément sécurisé et ledit serveur,
   - des moyens de comparaison de ladite période de temps théorique déterminée avec la période de temps réelle déterminée, et
   - des moyens de modification du second paramètre de sorte que la période de temps théorique soit similaire ou tende vers la période de temps réelle déterminée si la période de temps théorique déterminée est différente de la période de temps réelle déterminée, et
   - des moyens de détermination d'une nouvelle période de temps théorique prenant en compte ledit second paramètre modifié, et
   - des moyens d'envoi, à l'élément sécurisé, du second paramètre modifié pour contrôler une détermination, au niveau de l'élément sécurisé, d'une nouvelle période de temps théorique entre deux instants de connexion consécutifs, en utilisant le second paramètre modifié.

12. Serveur conforme à la revendication 11, **caractérisé en ce qu'**il comporte en outre des moyens de détermination de la valeur d'un paramètre n en utilisant ledit ensemble de paramètres (ICCID, V, I), ledit ensemble de paramètres comportant un paramètre d'identification unique (ICCID), un premier paramètre (V) et un second paramètre (I).

13. Serveur conforme à la revendication 12, **caractérisé en ce que** lesdits moyens de détermination de ladite période de temps théorique comportent des moyens de multiplication dudit intervalle d'accès théorique par ladite valeur dudit paramètre n déterminée, le résultat de la mise en oeuvre desdits moyens de multiplication étant ladite période de temps théorique (T).

14. Serveur conforme à la revendication 12, **caractérisé en ce qu'**il comporte des moyens de détermination dudit premier paramètre (V) et dudit second paramètre (I) de sorte que ledit premier instant de connexion est dans une plage de valeurs comprise entre un premier instant de temps prédéterminée et un second instant prédéterminé.

15. Elément sécurisé, incorporable dans un dispositif hôte, comprenant des moyens de gestion des connexions avec un serveur (30) d'un réseau de communication (300), conforme à l'une des revendications 11 à 14 **caractérisé en ce qu'**il comporte en outre :

- des moyens de détermination de la valeur d'un paramètre n en utilisant un ensemble de paramètres (V, I, ICCID), ledit ensemble de paramètres comportant un paramètre d'identification unique (ICCID) associé audit élément sécurisé (20), un premier paramètre (V) incrémentée après chaque connexion de l'élément sécurisé au serveur et un second paramètre (I) modifiable par le serveur, le paramètre n représentant le nombre d'intervalles d'accès ($t_{acc}$) dans une période de temps entre deux instants de connexion ($t_1$, $t_2$) au serveur (30),
- des moyens de détermination, en fonction du paramètre n, de la période de temps entre deux instants de connexion consécutifs ($t_1$, $t_2$) au serveur (30), et
- des moyens d'établissement d'une connexion avec le serveur (30) à des instants de connexion ($t_1$, $t_2$, ..., $t_n$) en fonction de la période de temps déterminé, et
- des moyens de réception, du serveur, d'une valeur modifiée du second paramètre et de mise à jour du paramètre $n$ en fonction du second paramètre modifié pour déterminer une nouvelle période de temps entre deux instants de connexion consécutifs au serveur.

16. Elément sécurisé conforme à la revendication précédente, **caractérisé en ce que** lesdits moyens de détermination de ladite période de temps comporte des moyens de comptage d'un nombre d'intervalles d'accès réels ($t_{acc}$) du dispositif hôte à l'élément sécurisé, la période de temps étant équivalente au temps écoulé lors du comptage d'un nombre d'intervalles réels d'accès ($t_{acc}$) égal à la valeur du paramètre $n$ déterminé par les moyens de détermination.

17. Dispositif hôte **caractérisé en ce qu'**il comporte un élément sécurisé conforme à l'une des revendications 15 ou 16.

18. Programme d'ordinateur comprenant des instructions pour la mise en oeuvre d'un procédé selon l'une des revendications 1 à 10, lorsqu'il est chargé et exécuté par un microprocesseur.

19. Support d'informations lisible par un microprocesseur, comprenant les instructions d'un programme d'ordinateur pour mettre en oeuvre un procédé selon l'une des revendications 1 à 10.

**Patentansprüche**

1. Verfahren zur Verwaltung von Verbindungen zwischen einem sicheren Element und einem Server (30) eines Kommunikationsnetzes, wobei das sichere Element (20) in eine Hostvorrichtung (10) integriert ist, wobei das Verfahren zur Verwaltung von Verbindungen **dadurch gekennzeichnet ist, dass** es am Server die folgenden Schritte aufweist:

- Bestimmen (E300) einer theoretischen Zeitspanne zwischen zwei aufeinanderfolgenden Verbindungszeitpunkten zwischen dem sicheren Element und dem Server in Abhängigkeit von einem Parametersatz und eines theoretischen Zugriffsintervalls, das der Hostvorrichtung zugeordnet ist, wobei der Parametersatz einen eindeutigen Identifikationsparameter (ICCID), der dem sicheren Element (20) zugeordnet ist, einen ersten Parameter (V), der nach jeder Verbindung des sicheren Elements mit dem Server inkrementiert wird, und einen zweiten Parameter (I), der vom Server veränderbar ist, aufweist,
- Bestimmen (E400) einer Istzeitspanne zwischen zwei aufeinanderfolgenden Verbindungszeitpunkten zwischen dem sicheren Element und dem Server,
- Vergleichen (E500) der bestimmten theoretischen Zeitspanne mit der bestimmten Istzeitspanne, und

wenn sich die bestimmte theoretische Zeitspanne von der bestimmten Istzeitspanne unterscheidet:

- Verändern (E600) des zweiten Parameters, damit die theoretische Zeitspanne ähnlich wie die bestimmte Istzeitspanne ist oder zu ihr tendiert,
- Bestimmen einer neuen theoretischen Zeitspanne, die den veränderten zweiten Parameter berücksichtigt, und
- Senden (E33') des veränderten zweiten Parameters an das sichere Element, um am sicheren Element eine Bestimmung einer neuen theoretischen Zeitspannen zwischen zwei aufeinanderfolgenden Verbindungszeitpunkten zu kontrollieren, unter Verwendung des veränderten zweiten Parameters.

2. Verfahren nach Anspruch 1, **dadurch gekennzeichnet, dass** es einen Schritt des Bestimmens (E100) des Werts eines Parameters n unter Verwendung des Parametersatzes (ICCID, V, I) aufweist.

3. Verfahren nach Anspruch 2, **dadurch gekennzeichnet, dass** das Bestimmen (E300) der theoretischen Zeitspanne einen Schritt des Multiplizierens des theoretischen Zugriffsintervalls mit dem bestimmten Wert des Parameters n aufweist, wobei das Ergebnis die theoretische Zeitspanne (T) ist.

4. Verfahren nach einem der Ansprüche 2 oder 3, **dadurch gekennzeichnet, dass** der Schritt des Bestimmens der Istzeitspanne einen vom sicheren Element (20) durchgeführten Schritt des Zählens einer Anzahl von Istzugriffsintervallen ($t_{acc}$) der Hostvorrichtung (10) auf das sichere Element (20) aufweist, wobei die Istzeitspanne der Zeit entspricht, die beim Zählen einer Anzahl von Istzugriffsintervallen ($t_{acc}$) verstrichen ist, die gleich dem bestimmten Wert des Parameters n ist.

5. Verfahren nach Anspruch 4, **dadurch gekennzeichnet, dass** es einen Schritt des Sendens (E20) aufweist, der vom sicheren Element (20) durchgeführt wird, wobei der letzte Wert des Parameters n, der beim Schritt des Zählens einer Anzahl von Istzugriffsintervallen erreicht wird, bevor die Hostvorrichtung ausgeschaltet oder neu gestartet wird, an den Server gesendet wird, wobei der Schritt des Sendens (E20) durchgeführt wird, wenn die Hostvorrichtung (10) eine Initialisierungsphase (E1) mit dem Server (30) einleitet, wobei die Initialisierungsphase (E1) nach dem Einschalten oder Neustart der Hostvorrichtung durchgeführt wird.

6. Verfahren zur Verwaltung von Verbindungen nach einem der Ansprüche 1 bis 5, **dadurch gekennzeichnet, dass** der Parametersatz einen eindeutigen Identifikationsparameter (ICCID), einen ersten Parameter (V) und einen zweiten Parameter (I) aufweist.

7. Verfahren zur Verwaltung von Verbindungen nach Anspruch 6, **dadurch gekennzeichnet, dass** nach der Einschalt- oder Neustartphase und der Initialisierungsphase (E1) das Verfahren das Herstellen einer ersten Verbindung zu einem ersten Verbindungszeitpunkt mit einem Wert zwischen einem ersten vorbestimmten Zeitpunkt und einem zweiten vorbestimmten Zeitpunkt aufweist.

8. Verfahren zur Verwaltung von Verbindungen nach einem der Ansprüche 4 bis 7, **dadurch gekennzeichnet, dass** es einen vom Server durchgeführten Schritt des Bestimmens des Istzugriffsintervalls, das der Hostvorrichtung zugeordnet ist, anhand der Istzeitspanne und des bestimmten Werts des Parameters n aufweist.

9. Verfahren nach einem der Ansprüche 2 bis 5, **dadurch gekennzeichnet, dass** der Schritt des Veränderns (E600) und der Schritt des Bestimmens (E100) des Werts eines Parameters n vom Server (30) durchgeführt werden, wobei das Verfahren ferner einen Schritt des Sendens aufweist, der vom Server durchgeführt wird, wobei der bestimmte Wert des Parameters n an das sichere Element gesendet wird.

10. Verfahren zur Verwaltung von Verbindungen nach einem der Ansprüche 4 bis 9, **dadurch gekennzeichnet, dass** es das Erstellen (E40) einer Datenstruktur aufweist, die Datenelemente in Bezug auf einen Satz sicherer Elemente aufweist, wobei die Datenelemente in Bezug auf den Satz sicherer Elemente für jedes sichere Element des Satzes, die bestimmte theoretische Zeitspanne, die bestimmte Istzeitspanne, das bestimmte theoretische Zugriffsintervall, das bestimmte Istzugriffsintervall und die Anzahl von Zugriffsintervallen, die beim Schritt des Zählens gezählt werden, sind, und dadurch, dass die Datenstruktur im Server gespeichert wird und aktualisiert wird, wenn wenigstens eins der Datenelemente bestimmt oder empfangen wird.

11. Server eines Kommunikationsnetzes aufweisend Mittel zur Verbindung mit einem Satz sicherer Elemente (20), wobei jedes sichere Element in eine Hostvorrichtung integriert ist, wobei der Server **dadurch gekennzeichnet ist, dass** er für jedes sichere Element (20) Folgendes aufweist:

- Mittel zum Bestimmen einer theoretischen Zeitspanne zwischen zwei aufeinanderfolgenden Verbindungszeitpunkten zwischen dem sicheren Element und dem Server in Abhängigkeit von einem Parametersatz und eines theoretischen Zugriffsintervalls, das der Hostvorrichtung zugeordnet ist, wobei der Parametersatz einen eindeutigen Identifikationsparameter (ICCID), der dem sicheren Element (20) zugeordnet ist, einen ersten Parameter (V), der nach jeder Verbindung des sicheren Elements mit dem Server inkrementiert wird, und einen zweiten Parameter (I), der vom Server veränderbar ist, aufweist,

- Mittel zum Bestimmen einer Istzeitspanne zwischen zwei aufeinanderfolgenden Verbindungszeitpunkten zwischen dem sicheren Element und dem Server,
- Mittel zum Vergleichen der bestimmten theoretischen Zeitspanne mit der bestimmten Istzeitspanne, und
- Mittel zum Verändern des zweiten Parameters, damit die theoretische Zeitspanne ähnlich wie die bestimmte Istzeitspanne ist oder zu ihr tendiert, wenn sich die bestimmte theoretische Zeitspanne von der bestimmten Istzeitspanne unterscheidet, und
- Mittel zum Bestimmen einer neuen theoretischen Zeitspanne, die den veränderten zweiten Parameter berücksichtigt, und
- Mittel zum Senden des veränderten zweiten Parameters an das sichere Element, um am sicheren Element eine Bestimmung einer neuen theoretischen Zeitspanne zwischen zwei aufeinanderfolgenden Verbindungszeitpunkten zu kontrollieren, unter Verwendung des veränderten zweiten Parameters.

12. Server nach Anspruch 11, **dadurch gekennzeichnet, dass** er ferner Mittel zum Bestimmen des Werts eines Parameters n unter Verwendung des Parametersatzes (ICCID, V, I) aufweist, wobei der Parametersatz einen eindeutigen Identifikationsparameter (ICCID), einen ersten Parameter (V) und einen zweiten Parameter (I) aufweist.

13. Server nach Anspruch 12, **dadurch gekennzeichnet, dass** die Mittel zum Bestimmen der theoretischen Zeitspanne Mittel zum Multiplizieren des theoretischen Zugriffsintervalls mit dem bestimmten Wert des Parameters n aufweisen, wobei das Ergebnis der Verwendung der Mittel zum Multiplizieren die theoretische Zeitspanne (T) ist.

14. Server nach Anspruch 12, **dadurch gekennzeichnet, dass** er Mittel zum Bestimmen des ersten Parameters (V) und des zweiten Parameters (I) aufweist, so dass der erste Verbindungszeitpunkt in einem Wertebereich zwischen einem ersten vorbestimmten Zeitpunkt und einem zweiten vorbestimmten Zeitpunkt liegt.

15. Sicheres Element, das in eine Hostvorrichtung integrierbar ist, umfassend Mittel zur Verwaltung von Verbindungen mit einem Server (30) eines Kommunikationsnetzes (300) nach einem der Ansprüche 11 bis 14, **dadurch gekennzeichnet, dass** es ferner Folgendes aufweist:

- Mittel zum Bestimmen des Werts eines Parameters n unter Verwendung eines Parametersatzes (V, I, ICCID), wobei der Parametersatz einen eindeutigen Identifikationsparameter (ICCID), der dem sicheren Element (20) zugeordnet ist, einen ersten Parameter (V), der nach jeder Verbindung des sicheren Elements mit dem Server inkrementiert wird, und einen zweiten Parameter (I), der vom Server veränderbar ist, aufweist, wobei der Parameter n die Anzahl von Zugriffsintervallen (tacc) in einer Zeitspanne zwischen zwei Verbindungszeitpunkten ($t_1$, $t_2$) mit dem Server (30) repräsentiert,
- Mittel zum Bestimmen der Zeitspanne zwischen zwei aufeinanderfolgenden Verbindungszeitpunkten ($t1$, $t_2$) mit dem Server (30) in Abhängigkeit vom Parameter $_n$, und
- Mittel zum Herstellen einer Verbindung mit dem Server (30) zu Verbindungszeitpunkten ($t_1$, $t_2$, .... $t_n$) in Abhängigkeit von der bestimmten Zeitspanne, und
- Mittel zum Empfangen eines veränderten Werts des zweiten Parameters vom Server und zum Aktualisieren des Parameters n in Abhängigkeit vom veränderten zweiten Parameter, um eine neue Zeitspanne zwischen zwei aufeinanderfolgenden Verbindungszeitpunkten mit dem Server zu bestimmen.

16. Sicheres Element nach dem vorhergehenden Anspruch, **dadurch gekennzeichnet, dass** die Mittel zum Bestimmen der Zeitspanne Mittel zum Zählen einer Anzahl von Istzugriffsintervallen ($t_{acc}$) der Hostvorrichtung auf das sichere Element aufweisen, wobei die Zeitspanne der Zeit entspricht, die beim Zählen einer Anzahl von Istzugriffsintervallen ($t_{acc}$) verstrichen ist, die gleich dem Wert des Parameters n ist, der durch die Mittel zum Bestimmen bestimmt wird.

17. Hostvorrichtung, **dadurch gekennzeichnet, dass** sie ein sicheres Element nach einem der Ansprüche 15 oder 16 aufweist.

18. Computerprogramm umfassend Anweisungen für die Durchführung eines Verfahrens nach einem der Ansprüche 1 bis 10, wenn es von einem Mikroprozessor geladen und ausgeführt wird.

19. Informationsträger, der von einem Mikroprozessor gelesen werden kann, umfassend die Anweisungen eines Computerprogramms für die Durchführung eines Verfahrens nach einem der Ansprüche 1 bis 10.

**Claims**

1. Method for managing connections between a secure element and a server (30) of a communication network, said secure element (20) being incorporated in a host device (10), said method for managing connections being **characterized in that** it comprises, at the server, the following steps:

  - determination (E300) of a theoretical time period between two consecutive instants of connection between said secure element and said server as a function of a set of parameters and of a theoretical polling interval associated with said host device, the set of parameters comprising a unique identification parameter (ICCID) associated with said secure element (20), a first parameter (V) incremented after each connection of the secure element to the server and a second parameter (I) modifiable by the server,
  - determination (E400) of a real time period between two consecutive instants of connection between said secure element and said server,
  - comparison (E500) of said determined theoretical time period with the determined real time period, and

  if the determined theoretical time period is different from the determined real time period:

  - modification (E600) of the second parameter such that the theoretical time period is similar or tends towards the determined real time period,
  - determination of a new theoretical time period taking into account said modified second parameter, and
  - sending (E33'), to the secure element, of the modified second parameter in order to control determination, at the secure element, of a new theoretical time period between two consecutive instants of connection, by using the modified second parameter.

2. Method according to Claim 1, **characterized in that** it comprises a step of determination (E100) of the value of a parameter *n* by using said set of parameters (ICCID, V, I).

3. Method according to Claim 2, **characterized in that** the determination (E300) of said theoretical time period comprises a step of multiplication of said theoretical polling interval by said determined value of said parameter n, the result being said theoretical time period (T).

4. Method according to either of Claims 2 and 3, **characterized in that** said step of determination of said real time period comprises a step of counting, implemented by said secure element (20), of a number of real polling intervals ($t_{acc}$) of the host device (10) to the secure element (20), the real time period being equivalent to the time elapsed during the counting of a number of real polling intervals ($t_{acc}$) equal to the determined value of the parameter n.

5. Method according to Claim 4, **characterized in that** it comprises a sending step (E20), implemented by the secure element (20), in which the latest value of said parameter n reached in the step of counting of a number of real polling intervals before said host device is switched off or restarted is sent to the sever, said sending step (E20) being implemented when said host device (10) initiates an initialization phase (E1) with the server (30), said initialization phase (E1) being implemented after the switching on or the restarting of said host device.

6. Method for managing connections according to one of Claims 1 to 5, **characterized in that** said set of parameters comprises a unique identification parameter (ICCID), a first parameter (V) and a second parameter (I).

7. Method for managing connections according to Claim 6, **characterized in that**, after the switching on or restarting phase and the initialization phase (E1), said method includes the setting up of a first connection at a first instant of connection having a value lying between a first predetermined time instant and a second predetermined time instant.

8. Method for managing connections according to one of Claims 4 to 7, **characterized in that** it comprises a step of determination, implemented by said server, of said real polling interval associated with said host device on the basis of said real time period and of said determined value of said parameter n.

9. Method according to one of Claims 2 to 5, **characterized in that** said modification step (E600) and said step of determination (E100) of the value of a parameter n are implemented by said server (30), said method further comprising a sending step, implemented by the server, in which said determined value of the parameter n is sent to said secure element.

10. Method for managing connections according to one of Claims 4 to 9, **characterized in that** it comprises the creation (E40) of a data structure comprising data relating to a set of secure elements, said data relating to said set of secure elements being, for each secure element of the set, said determined theoretical time period, said determined real time period, the determined theoretical polling interval, the determined real polling interval and the number of polling intervals counted during the counting step, and **in that** said data structure is stored in said server, and is updated when at least one of the data is determined or received.

11. Server of a communication network comprising means for connecting with a set of secure elements (20), each secure element being incorporated in a host device, said server being **characterized in that** it comprises, for each secure element (20):

- means for determining a theoretical time period between two consecutive instants of connection between said secure element and said server as a function of a set of parameters and of a theoretical polling interval associated with said host device, the set of parameters comprising a unique identification parameter (ICCID) associated with said secure element (20), a first parameter (V) incremented after each connection of the secure element to the server and a second parameter (I) modifiable by the server,
- means for determining a real time period between two consecutive instants of connection between said secure element and said server,
- means for comparing said determined theoretical time period with the determined real time period, and
- means for modifying the second parameter such that the theoretical time period is similar or tends towards the determined real time period if the determined theoretical time period is different from the determined real time period, and
- means for determining a new theoretical time period taking into account said modified second parameter, and
- means for sending, to the secure element, the modified second parameter in order to control determination, at the secure element, of a new theoretical time period between two consecutive instants of connection, by using the modified second parameter.

12. Server according to Claim 11, **characterized in that** it further comprises means for determining the value of a parameter $n$ by using said set of parameters (ICCID, V, I), said set of parameters comprising a unique identification parameter (ICCID), a first parameter (V) and a second parameter (I).

13. Server according to Claim 12, **characterized in that** said means for determining said theoretical time period comprise means for multiplying said theoretical polling interval by said determined value of said parameter n, the result of the implementation of said multiplication means being said theoretical time period (T).

14. Server according to Claim 12, **characterized in that** it comprises means for determining said first parameter (V) and said second parameter (I) such that said first instant of connection is within a range of values lying between a first predetermined time instant and a second predetermined instant.

15. Secure element, able to be incorporated in a host device, comprising means for managing connections with a server (30) of a communication network (300), according to one of Claims 11 to 14, **characterized in that** it further comprises:

- means for determining the value of a parameter $n$ by using a set of parameters (V, I, ICCID), said set of parameters comprising a unique identification parameter (ICCID) associated with said secure element (20), a first parameter (V) incremented after each connection of the secure element to the server and a second parameter (I) modifiable by the server, the parameter n representing the number of polling intervals (tacc) within a time period between two instants of connection ($t_1$, $t_2$) to the server (30),
- means for determining, as a function of the parameter $n$, the time period between two consecutive instants of connection ($t_1$, $t_2$) to the server (30), and
- means for setting up a connection with the server (30) at instants of connection ($t_1$, $t_2$, $t_n$) as a function of the determined time period, and
- means for receiving, from the server, a modified value of the second parameter and for updating the parameter n as a function of the modified second parameter in order to determine a new time period between two consecutive instants of connection to the server.

**16.** Secure element according to the preceding claim, **characterized in that** said means for determining said time period comprises means for counting a number of real polling intervals ($t_{acc}$) of the host device to the secure element, the time period being equivalent to the time elapsed during the counting of a number of real polling intervals ($t_{acc}$) equal to the value of the parameter n determined by the determination means.

**17.** Host device, **characterized in that** it comprises a secure element according to either of Claims 15 and 16.

**18.** Computer program comprising instructions for the implementation of a method according to one of Claims 1 to 10, when it is loaded and run by a microprocessor.

**19.** Microprocessor-readable information medium, comprising the instructions of a computer program for implementing a method according to one of Claims 1 to 10.

Fig. 1

EP 3 391 675 B1

# Fig.2

Fig. 3

Fig. 4

**EP 3 391 675 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015059006 A